# EUROPEAN PATENT APPLICATION

(11) **EP 0 921 337 A1**
(43) Date of publication of application: **09.06.1999**
(21) Application number: 98306068.2
(22) Date of filing: 30.07.1998
(51) Int. Cl.: F16K 31/68, G05D 23/02

(54) **Temperature sensing type flow rate control valve**

(30) Priority: 05.12.1997 JP 33516397
(71) Applicant: Nippon Thermostat Co., Ltd., Kiyose-shi, Tokyo 204-0003 (JP)
(72) Inventor: Uehara, Toyohiko, c/o Nipoon Thermostat Co., Ltd., Kiyose-shi, Tokyo 204-0003 (JP)
(74) Representative: Cummings, Sean Patrick

(57) **Abstract**

A temperature sensing type flow rate control valve which controls a small amount of a fluid with high accuracy by processing an outer peripheral portion of a piston rod of the temperature sensing type flow rate control valve. By expanding or narrowing a shaft diameter (d) of a piston rod (6) between a valve element (10) and a fluid inlet (2b) connectedly provided to a fluid channel (7), the flow rate control mechanism to control the flow amount of the fluid passing through the fluid channel (7) after opening or before closing of the valve element (10) can be obtained.

## Description

### BACKGROUND OF THE INVENTION

### 1. FIELD OF THE INVENTION

The present invention relates to a temperature sensing type flow rate control valve to control a flow rate of air supplied from an air cleaner to a by-pass circuit by sensing the temperature of a cylinder wall of an engine or the temperature of a cooling water, especially a temperature sensing type flow rate control valve which can minutely control a flow rate of a small quantity of air based on change of the cylinder wall temperature accompanied by change of outside air temperature and change of the engine temperature.

### 2. DESCRIPTION OF THE RELATED ART

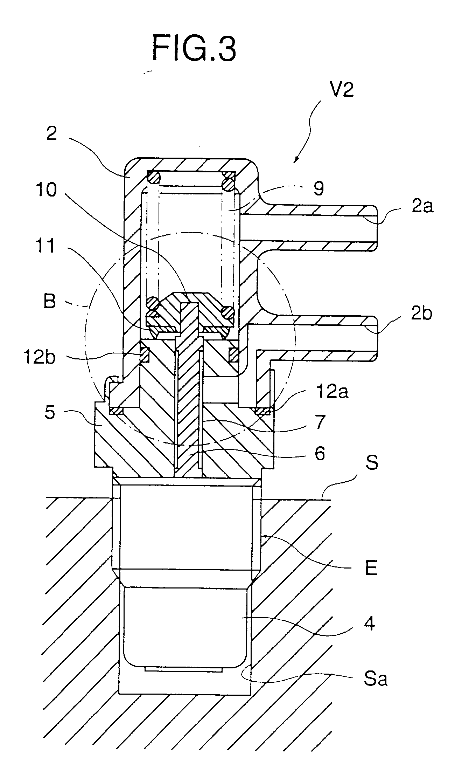

A temperature sensing type flow rate control valve has been known to control flow of a fluid in a fluid channel by opening and closing of a valve element provided in the fluid channel while sensing the temperature change of a sample to be measured. As an example of such flow rate control valve, there is a flow rate control valve V3 shown in Fig. 3.

The flow rate control valve V3 is provided in an air channel bypassing a throttle valve of an engine and linearly control a flow rate of air flowing through the channel with the temperature rise of a water jacket.

The linear control of the flow rate of air as the temperature change enable it possible to promote and improve atomizing fuel into an engine, and consequently to reduce the amount of hazardous materials such as carbon monoxide (CO) or hydrocarbon (HC).

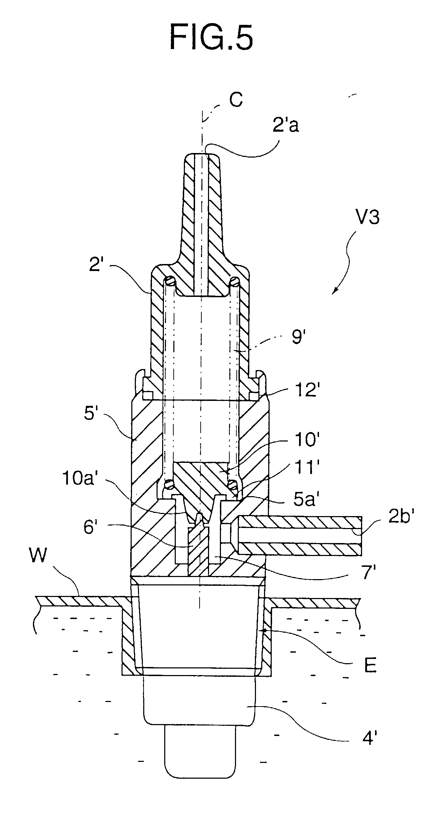

Fig. 5 shows a conventional example of temperature sensing type flow rate control valve V3, showing a vertical cross section of the whole structure.

The flow rate control valve V3 in the figure is provided in a air channel bypassing a throttle valve of an engine.

A thermo-element E which is a measuring device of the flow rate control valve V3 is screwed on a water jacket W and reciprocately moves a piston rod 6' to the other side (upward in the figure) and one side (downward in the figure) when sensing the temperature change of the cooling water in the water jacket W. The thermo-element E is defined by a temperature sensor 4' embedding wax (heat expansion member) which expands or shrinks according to the temperature change of the cooling water in the water jacket, the piston rod 6' moving to the other side as the wax expands, and a piston guide 5' to guide the reciprocating move of the piston rod 6'.

On the upper portion of the piston guide 5', a closed bottom cylindrical cover 2' is fitted, and a fluid outlet 2a' is formed on the bottom and a fluid inlet 2b' is formed on the side portion of the piston guide 5', respectively. The air flowing into the cover 2' from the fluid inlet 2b' is designed to discharge from the fluid inlet 2b' through a fluid channel 7' formed between the piston guide 5' and the piston rod 6' toward the outside of the cover 2'. Seal members 12' such as a packing and an O-ring are provided between the cover 2' and the piston guide 5' to maintain the air-tightness inside the cover 2'.

On the tip end of the piston rod 6' protruding in the piston guide 5', a valve element 10' is provided on the same axial line with the shaft line C of the piston rod 6'. A coil spring 9' is provided between the valve element 10' and the bottom of the cover 2' whereby the piston rod 6' is always biased in the return direction (in one side direction).

Accordingly, when the wax in the temperature sensing portion 4' shrinks due to a drop in temperature of the cooling water in the water jacket W, the piston rod 6' and the valve element 10' are forcibly moved in the return direction by the biasing force of the coil spring 9'.

By taking the above construction, when the engine starts, the wax in the temperature sensing portion 4' is in a shrink state, and the piston rod 6' and the valve element 10' are in a state of having moved to the other side by the biasing force of the coil spring 9. Therefore, upon abutting a seal portion 11' of the valve element 10' on a valve seat 5a', the air passage is restrained through closing the fluid inlet 2b' so that the passage to by-pass the throttle valve of the engine can be closed.

When the cooling water in the water jacket W rises in temperature by warming-up and the like, this temperature change is detected by the temperature sensing portion 4'. That is, the piston rod 6' and the valve element 10' move toward the other side due to the expansion of the wax in the temperature sensing portion 4' against the biasing force of the coil spring 9'. When the temperature of the cooling water in the water jacket exceeds the designated temperature, the fluid inlet 2b' is opened due to detaching of the seal portion 11' of the valve element 10' from the valve seat 5a', the restraint of the air passage is released, and the air is rapidly discharged in the direction of the throttle valve of the engine.

However, in such conventional temperature sensing type flow rate control valve V3, there are following disadvantages.
(1) When the cooling water in the water jacket W rises in temperature upon warming up of the engine, the wax in the temperature sensing portion 4' expands while it has been in a shrinkage state at the starting of the engine, and the valve element 10' which has been in an abutting state on the valve seat 5a' by the biasing force of the coil spring 9' gets released so that the air is rapidly discharged from the fluid inlet 2b' through the fluid passage channel 7' and the cover 2' toward the outside of the cover 2'.
   Such a rapid discharge of air makes the concentration of gasoline atomized in the throttle valve of the engine unstable, and causes a primary cause to increase the amount of an outbreak of hazardous material such as carbon monoxide and the like.
(2) When the valve element 10' shifts from a close state to an open state, the air is rapidly discharged to an inlet manifold. In order to prevent the above rapid discharge and secure an even amount of the flow, it is possible to form a taper portion 10a' at a portion in the fluid channel 7' of the valve element 10' and control a small amount of the air in an open state.
   However, in order to control the flow rate so as to gradually increase the flow rate of a small amount of the air, that is to perform so called a small amount of fluid flow control, it is necessary to provide a taper portion on the valve element 10', for which the vertical length of the valve element 10' is needed to be extended, results in difficulty in miniaturization. Besides, in order to obtain a large amount of flow rate in full throttle, it is necessary to make the diameter of the valve element 10' large. Therefore when the control of a minute amount of the flow rate just after opening of the valve is conducted using the above described large diameter valve 10', the valve element 10' is required to be precisely processed.

The present invention is carried out in consideration of the above disadvantages and an object of the present invention is to provide a temperature sensing type flow rate control valve which makes it possible to control a flow rate of a fluid having a small amount of the flow with high precision by processing an outer periphery portion of a piston rod of the temperature sensing type flow rate control valve.

### SUMMARY OF THE INVENTION

In order to achieve the above described object, a temperature sensing type flow rate control valve of the present invention which is provided with: a thermo- element having a heat expansion element which expands and shrinks according to the temperature change of a sample to be measured in one side, and moving a piston rod provided on the other side in a piston guide backward and forward by the above expansion and shrinkage of the heat expansion element, and forming a fluid channel between the piston guide and the piston rod; a valve element integrally provided with the other side end portion of the piston rod together with a seal portion in a cover having an aperture of the fluid, in order to open and close the fluid channel in accordance with the reciprocating movement of the piston rod due to temperature change of the sample to be measured; and a biasing means for biasing said valve element in the returning direction, is characterized by including a flow rate control system provided to control the flow rate of a fluid passing through the fluid channel after opening or before closing of the valve by expanding or narrowing the shaft diameter of the piston rod between the valve element and the aperture of the fluid connectedly provided in the fluid channel.

The shaft diameter of the piston rod is processed to form a narrow portion in a step-by-step manner from an end portion of the valve element side toward an end portion of the heat expansion element side, thereby controlling the flow rate control.

Further, the shaft diameter of the piston rod is processed to form a narrow portion in a taper form from an end portion of the valve toward an end portion of the heat expansion element, and the flow rate control can be conducted using the above described narrow portion.

### BRIEF DESCRIPTION OF THE DRAWINGS

Fig. 1 is a vertical cross sectional view explaining a whole structure of the flow rate control valve relating to a first embodiment of the present invention;
Figs. 2 are fragmentary enlarged views of portion A in Fig. 1. Fig. 2 (a) shows a closed state of a valve element and Fig. 2 (b) shows an opened state of the valve element;
Fig. 3 is a vertical cross sectional view explaining a whole structure of the flow rate control valve relating to a second embodiment of the present invention;
Figs. 4 are fragmentary enlarged views of portion B in Fig. 3. Fig. 4 (a) shows a closed state of a valve element and Fig. 4 (b) shows an opened state of the valve element; and
Fig. 5 relates to a conventional example of the temperature sensing type flow rate control valve and is a vertical cross sectional view explaining a whole structure of the flow rate control valve to control the flow amount of air supplied to an inlet manifold of an engine.

### DETAILED DESCRIPTION OF THE PREFERRED EMBODIMENT(S)

The preferred embodiments of a temperature sensing type flow rate control valve relating to the present invention having such formation will be explained with reference to the drawings. A flow rate control valve which will be explained in the following embodiment is fixed in a cylinder of an engine, and be able to linearly control the flow rate of the air amount in a by-pass circuit in accordance with a load on the engine by opening and closing the by-pass circuit connecting to an air passage in a carburetor with sensing the temperature change on the cylinder wall.

Note that the flow rate control valve is not limited to the present embodiment but it can be also expressed that the flow rate control valve according to the present invention is screwed into a water jacket explained in the conventional example and controls a flow rate upon sensing the temperature of the cooling water in the water jacket.

Further, on the contrary of a mechanism making a valve element open when the temperature of a sample to be measured rises, it is quite natural that even a mechanism having an interior structure that makes the valve open when the temperature drops, can control a flow rate of a fluid.

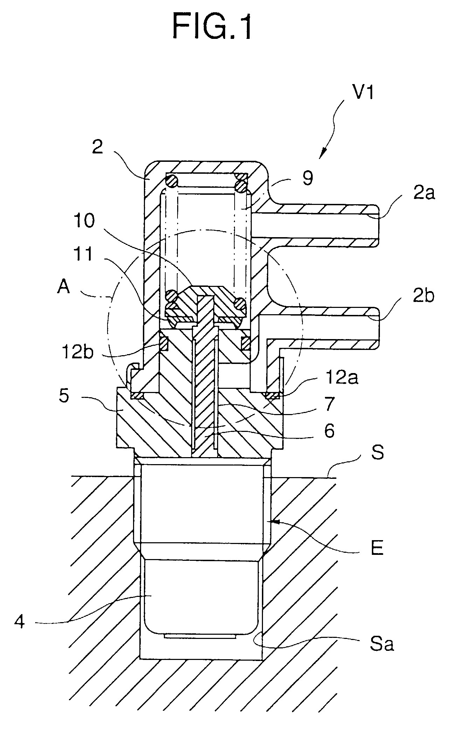

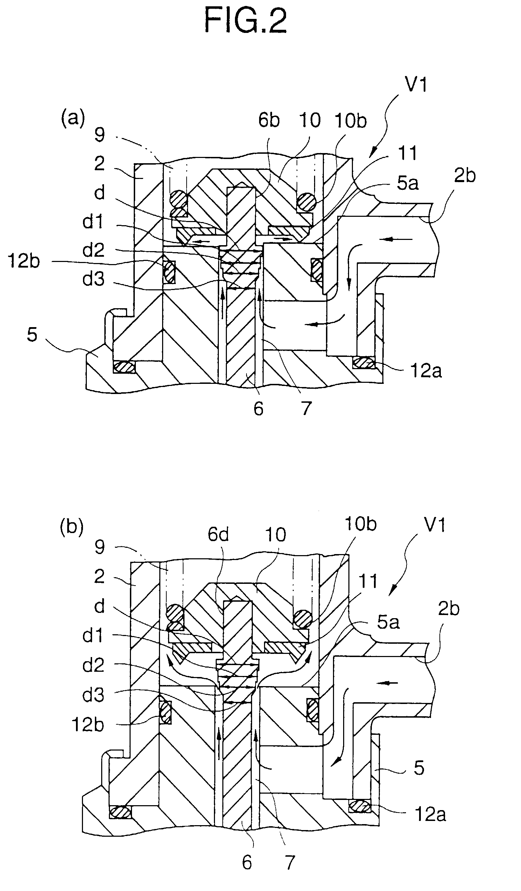

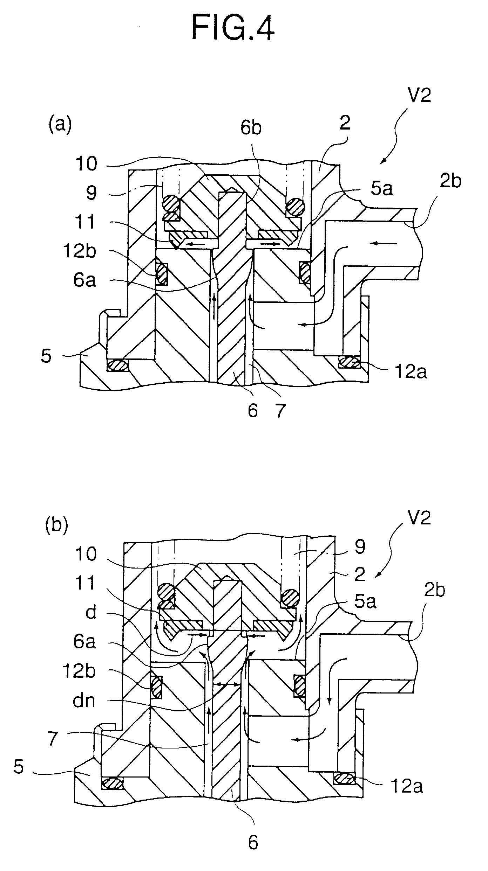

Fig. 1 relates to a first embodiment of the present invention and is a vertical cross sectional view showing a whole structure of the flow rate control valve. Figs. 2 are partially enlarged views of portion A in Fig. 1, where Fig. 2 (a) is an explanatory view showing the valve element in a closed state, and Fig. 2 (b) is an explanatory view showing the valve element in an opened state. Fig. 3 relates to a second embodiment of the present invention and is a vertical cross sectional view for explaining a whole structure of the flow rate control valve. Figs. 4 are partially enlarged views of portion B in Fig. 3 and Fig. 4 (a) is an explanatory view showing the valve element in a closed state, and Fig. 4 (b) is an explanatory view showing the valve element in an opened state.

Note that, when an expression "the other side" is appeared in the following explanation, it means "an upper side" in the drawing and an expression "one side" means "a bottom side" in the drawing and the same reference numerals will be used to designate the same portion and the same components as those in the conventional example, so that the explanation will be omitted.

### [First embodiment]

The first embodiment of the present invention will be explained here.

A temperature sensing type flow rate control valve V1 of the present invention has wax or a heat expansion element which expands or shrinks in accordance with the temperature change of a cylinder wall surface S which is a portion to be measured in one side, thereby allowing a piston rod 6 provided on the other side to move up and down in the inside of a piston guide 5 by the expansion and shrinkage of the wax, and is provided with: a thermo-element E which forms a fluid channel 7 between the piston guide 5 and the piston rod 6; a valve element 10 which has a seal member 11 and is integrally provided with an end portion of the other side of the above described piston rod 6 to open and close the fluid channel 7 accompanied by the reciprocating movement of the piston rod 6 due to the temperature change of the above described portion to be measured, and a coil spring 9 which is a biasing means to bias the valve element 10 in the return direction.

The above described flow rate control valve V1 has a structure including a flow rate control system to control a flow rate of a fluid flowing in the fluid channel 7 by expanding or narrowing the shaft diameter d of the piston rod 6 between the valve element 10 and a fluid inlet 2b of a fluid aperture connectedly provided in the fluid channel 7.

In the present embodiment, since the flow rate control system is a flow rate control in a manner to increase a flow rate of a fluid step-by-step, the mechanism makes the shaft diameter of the piston rod 6 narrow in stages from an end portion of the valve element 10 side toward the other end portion of the heat expansion element side so that the diameters of the narrow portions having different shapes are to be d1, d2, d3···. By making the above described configuration, the system is to control the flow rate in a manner to increase it step-by-step.

The temperature sensing type flow rate control valve V1 will be explained more in detail. As shown in Fig. 1, the thermo-element E which is a driving source of the flow rate control valve V1 is housed in the piston guide 5 and a closed bottom cylindrical cover 2 is attached to the piston guide 5 through seal members 12a and 12b. A fluid outlet 2a is formed on the side portion of the cover 2. Note that in the first embodiment the fluid outlet 2a is provided on the side portion, but the air can flow out through the bottom portion of the closed bottom cylindrical cover 2. Accordingly, it can be said that the fluid outlet 2a is provided on the side portion or bottom portion.

### [Explanation of the valve element structure]

On the tip end of the piston rod 6, a valve element 10 made of an elastic body such as rubber and resin or a high corrosion and temperature resistant metal is attached. On the periphery of the valve portion of the valve element 10 must be larger in size than the periphery of the fluid channel 7. And in the case of a rubber or plastic made elastic valve element 10, a seal portion 11 to improve the air tightness effect can be integrally formed and in the case of a metal valve element 10, the seal portion 11 made of rubber or plastic can be adhered on the bottom portion of the valve element 10 with an adhesive. And in order to attach the valve element 10 to the piston rod 6, an attachment portion 6b is formed on the piston rod 6 as is shown in Fig. 1 and Fig. 2, and the valve element 10 can be firmly fixed by adhesion or baking.

On the outer peripheral surface of the valve element 10, a handguard shaped spring bearing portion 10b is formed on which the coil spring 9 as the biasing means which will be described later is designed to fit so that the spring bearing 10b is formed in a column having a little shorter outer diameter than the inner diameter of the coil spring 9.

The coil spring 9 as the biasing means gives a biasing effect on the spring bearing portion 10b to bias the piston rod 6 in the return direction (the opposite direction to a moving direction of the piston rod 6 due to the expansion of wax) so that the piston rod 6 moved toward the other side by the expansion of the wax is biased in the return direction (one side) by the coil spring 9.

### [Explanation of the flow rate control in the fluid channel by means of the piston rod]

The fluid channel 7 which is a fluid channel formed between the piston rod 6 and the piston guide 5 is formed in a manner that it makes the shaft of the piston rod 6 to narrow in stages from the end portion of the valve element 10 side toward the other end portion of the wax side as shown in Fig. 2 so that it has different diameters of d1, d2, d3···.

A fluid flows-in through the fluid inlet 2b which is connectedly provided between the valve element 10 in the fluid channel 7 and the end portion of the wax side and flows out from the fluid outlet 2a on the cover 2 through the fluid channel 7.

That is, when the temperature of the cylinder wall surface S rises, the wax expands and the piston rod 6 also advances inside the piston guide 5. On this occasion, the seal portion 11 of the valve element 10 first detaches from the valve seat 5a formed on the piston guide 5, and the piston rod 6 also advances in accordance with the expansion speed of the wax. At this time, the spaces between the piston rod 6 and the piston guide 5 differs in accordance with the shaft diameters d of the piston rod 6, d1, d2, d3···, and the flow amount of the fluid passing through the spaces are controlled in accordance with d1, d2, d3···of the shaft diameter d.

When the flow rate needs to be controlled on the basis of time as well as the amount of flow, it becomes possible by changing the length of the narrow portions of the piston rod 6 formed in stages, namely the length of the portions d1, d2, 63···of the shaft diameter d.

### [Explanation of the fluid inlet and fluid outlet]

The fluid inlet 2b can be provided at any position in the piston guide 5, and the fluid outlet 2a can be provided on any position and in any direction of the cover 2, provided that the fluid inlet 2b is connected to the fluid outlet 2a through the cover 2 and is placed on the portion of the wax side of the narrowed portion formed on the piston rod 6 in the fluid channel 7.

### [Explanation of the effects of the first embodiment]

The effects of the flow rate control valve V1 of the above formation will be explained next.

Upon starting the engine, in order to trap the air flow in the conduit along the inlet manifold as shown in Fig. 1, the valve element 10 is closed when the piston rod 6 is moved to the farthest in one side so that the air flowing into the fluid channel 7 from the fluid inlet 2b is blocked by the seal portion 11 of the valve element 10 as shown in Fig. 2 (a).

As shown in Fig. 2 (b) when the temperature of the cylinder wall surface S rises, the temperature rise is sensed by a temperature sensing portion 4 so that the piston rod 6 is pushed inside the piston guide by the expanded wax and advances. On this occasion, the seal portion 11 of the valve element 10 is detached from the valve seat 5a formed on the piston guide 5 first, and the piston rod 6 also advances in accordance with the expansion speed of the wax.

At this time, the spaces between the piston rod 6 and the piston guide 5 are differently formed in size by d1, d2, d3···of the shaft diameter d of the piston rod so that the flow rate of the air passing through the spaces takes different in amount in accordance with d1, d2, d3···of the shaft diameter. Furthermore, when the flow rate control in the basis of time is needed, it is conducted by adjusting the length of d1, d2, d3···of the shaft diameter d. Through these flow rate control of the air, a rapid discharge of the air to the inlet manifold is avoided and the step-by-step flow rate control responding to the temperature change becomes possible.

### [Explanation of the second embodiment]

The second embodiment of the present invention will be explained next, referring to Fig. 3 and Fig. 4. Note that, in Fig. 3 and Fig. 4, the same numerals are given to the same portions or the same members as those in the first embodiment so that the further explanation can be omitted.

Fig. 3 is an enlarged cross sectional view of the main portion of a flow rate control valve V2 according to the second embodiment of the present invention.. In the second embodiment of the present invention explained below, a different point from the above described first embodiment is that the shaft diameter d of the piston rod 6 is formed to have a taper shaped shaft diameter dn from the end portion of the valve element 10 side toward the other end portion of the wax side of the heat expansion member 4.

That is, in the present embodiment, the flow rate control system is to linearly control continuously and the mechanism for the object is to narrow the shaft diameter d of the piston rod 6 in a taper along from the end portion of the valve element 10 side toward the other end portion of the wax side of the heat expansion member 4 and to linearly control the flow rate of the air passing through the fluid channel 7 by making the taper shaped shaft diameter to be from d to dn.

And in the second embodiment, a flow rate control valve to control the flow amount of the air in an increasing manner, will be explained.

### [Explanation of the flow rate control of the fluid channel by the piston rod]

The fluid channel 7 is an air passage formed between the piston rod 6 and the piston guide 5. In the fluid channel 7, the shaft diameter d of the piston rod 6 is formed to be a taper shaped shaft diameter dn as shown in Fig. 4, from the end portion of the valve element side toward the end portion of the wax side.

As explained in the first embodiment, the air flowing in from the fluid inlet 2b is discharged from the fluid outlet 2a of the cover 2 through the fluid channel 7.

When the temperature on the surface of the cylinder wall rises, the wax expands, and the piston rod 6 advances inside the piston guide in accordance with the expansion speed of the wax. In this situation, the space between the piston rod 6 and the piston guide 5, the space which is affected by the taper shape from the shaft diameter d to dn of the piston rod can not be even. Therefore, the amount of the air flow passing through the taper shaped space is linearly controlled according to the shaft diameter from d to dn.

Note that, when a time-base control of the flow rate as well as the amount of the flow is required, it becomes possible by adjusting the length of the narrowed portion of the piston rod 6 which is formed in a step-by-step manner, namely the length of the taper shapes between from d to dn of the shaft diameter.

### [Explanation of the effects of the second embodiment]

The effects of the flow rate control valve V2 of the above formation is explained next.

Upon starting of an engine in a cold season, as shown in Fig. 3, the piston rod 6 moves toward the nearest position to the other side, closing the valve element 10 to trap the amount of the air flow in the conduit along the inlet manifold.

The air flowing from the fluid inlet 2b into the fluid channel 7 is blocked by the seal portion 11 of the valve element 10 shown in Fig. 4 (a). When the temperature on the surface of the cylinder wall S rises, the temperature rise is sensed by the temperature sensing portion 4 and the expanded wax pushes the piston rod 6 in the inside of the piston guide 5 to allow the piston rod 6 to advance as shown in Fig. 4 (b). In this situation, the seal portion 11 of the valve element 10 detaches the valve seat 5a formed in the piston guide 5, and then the piston rod 6 advances in accordance with the expansion speed of the wax.

At this time, the space between the piston rod 6 and the piston guide 5 is continuously formed with no steps due to the taper shaped piston rod 6 having the shaft diameter of d to dn so that the flow amount of the air passing through the space is linearly controlled, thereby facilitating a minute flow rate control of a small amount of flow. By adjusting the length of the shaft diameter of the piston rod 6 from d to dn, the time base flow rate control is attained. With the aforementioned flow rate control of air, a rapid discharge of the air into the inlet manifold is avoided, a linear flow rate control in response to the temperature change becomes possible.

### [Others]

The preferred embodiments of the present invention have been explained so far, but the present invention is not limited to the above described embodiments.

For instance, in the first and the second embodiments, the flow rate control of air into the inlet manifold is explained as an example, the fluid is not limited to a gaseous body such as air or other gases, but needless to say, the fluid could be other materials such as water or oils.

In the above first and second embodiments, the biasing means is explained as the coil spring 9 biasing the piston rod 6 in the return direction, it can be other biasing means such as rubber, provided that it can bias the piston rod 6 in a reverse direction to the moving direction of the piston rod 6 due to the wax expansion so as to allow the piston rod to return. Or the valve element 10 can be directly biased.

Further, in the first and second embodiments, the temperature sensing type flow rate control valve is explained to have a structure in which the piston rod 6 performing the flow rate control, is shifted from a closed state to an opened state, sensing the rising temperature change of a body to be measured, but needless to say, the temperature sensing type flow rate control valve can be a flow control structure in which upon sensing the rising temperature change of the body to be measured, the piston rod 6 is shifted from an opened state to a closed state.

The present invention has the following effects by taking the above described structures.
(1) Wax in a temperature sensing portion expands accompanied by warming up of an engine and opens the valve element, so that the fluid is rapidly discharged from the fluid channel through a cover to the outside thereof. But since the present invention has a flow rate control mechanism to expand or narrow the shaft diameter of the piston rod, it becomes possible to control the amount of the flow discharged from the fluid channel.
   By taking a flow rate control mechanism to change the shaft diameter of the piston rod in a step-by-step manner, a flow rate control valve which enable it possible to control a predetermined amount of the flow can be obtained.
   Further, by taking a flow rate control mechanism to make the shaft diameter of the piston rod in a taper form, the flow rate control valve to linearly control the flow rate can be obtained.
(2) The flow rate control valve having the above described structure prevents from instantaneous discharge of a large amount of the fluid just after or just before the valve opening, and secures a high precision flow rate control to a minute flow amount with a piston rod having a small shaft diameter and a piston guide of the piston rod.
(3) Further, since the valve element only forms a seal portion to open and close the fluid, miniaturization of the valve element in longitudinal length can be materialized. As a result, the flow control valve itself is reduced in size.

## Claims

1. A temperature sensing type flow rate control valve, which is provided with
a thermo-element(E), having a heat expansion element which expands and shrinks according to a temperature change of a sample to be measured in the other side, and moving a piston rod(6, 6'), provided on one side in a piston guide(5, 5') backward and forward by the expansion and shrinkage of the heat expansion element, and forming a fluid channel(7, 7') between the piston guide(5, 5')and the piston rod(6, 6'),
a valve element(10, 10') integrally provided with a side end portion of said piston rod(6, 6') with a seal portion(11, 11') in a cover(2, 2') having an aperture of the fluid channel(7, 7') to open and close said fluid channel(7, 7') in accordance with the reciprocating movement of said piston rod(6, 6') due to temperature change of said sample to be measured; and
a biasing means(9, 9') for exerting said valve element(10, 10') in the returning direction, characterizing in that
a flow rate control system to control the amount of flow of a fluid flowing in said fluid channel(7, 7') after opening or before closing of said valve(V1, V2) by expanding or narrowing the shaft diameter of said piston rod(6, 6') between said valve element(10, 10') and the aperture of the fluid connectedly provided in said fluid channel(7, 7').

2. The temperature sensing type flow rate control valve according to claim 1, wherein the shaft diameter of said piston rod(6, 6') is processed to form a narrow portion in a step-by-step manner from an end portion of the valve element(10, 10') side toward an end portion of the heat expansion element(4, 4') side and the flow rate control is conducted using the narrow portions having different shapes.

3. The temperature sensing type flow rate control valve according to claim 1, wherein the shaft diameter of said piston rod(6, 6') is processed to form a narrow portion in a taper form from an end portion on the valve element(10, 10') side to an end portion of the heat expansion element(4, 4') side and the flow rate control is conducted using the narrowed portion.
